# EUROPÄISCHE PATENTANMELDUNG

(11) **EP 1 000 857 A2**
(43) Veröffentlichungstag der Anmeldung: **17.05.2000**
(21) Anmeldenummer: 99121843.9
(22) Anmeldetag: 04.11.1999
(51) Int. Cl.: B65B 7/16

(54) **Siegelwerkzeug und Verfahren zum Siegeln von Verpackungen**

(30) Priorität: 12.11.1998 DE 19852113
(71) Anmelder: Tiromat Krämer + Grebe GmbH & Co. KG, 35216 Biedenkopf-Wallau (DE)
(72) Erfinder: Thomas, Ulrich, 35236 Breidenbach-Oberdieten (DE); Blöcher, Rolf, 35236 Breidenbach (DE); Inverardi, Celestino, 25030 Corzano (Bs) (IT)
(74) Vertreter: Wolff, Felix, Dr.

(57) **Zusammenfassung**

Die vorliegende Erfindung betrifft Siegelwerkzeug zum Siegeln einer Verpackungsmulde mit einer Deckelfolie bestehend aus einem Unterteil, Seitenteilen, die quer und Seitenteilen, die parallel zur Transportrichtung der Verpackungsmulden ausgerichtet sind, dadurch gekennzeichnet, daß Seitenteile, die quer zur Transportrichtung ausgerichtete nach unten verschiebbar sind, während die anderen Teile des unteren Siegelwerkzeuges in ihrer räumlichen Lage gegenüber dem Maschinenrahmen fixiert sind.

## Beschreibung

Die vorliegende Erfindung betrifft ein Siegelwerkzeug zum Siegeln einer Verpackungsmulde mit einer Deckelfolie.

Verpackungen, insbesondere für Lebensmittel, spielen in der heutigen Zeit eine immer größere Rolle, um Lebensmittel haltbar zu machen. Die Lebensmittel werden zum Verpacken in eine sogenannte Verpackungsmulde gelegt und die Verpackungsmulde wird dann mit einer Deckelfolie gasdicht verschlossen, indem die Deckelfolie auf den Rand der Verpackungsmulde gesiegelt wird.

Die Verpackungsmulden werden in der Regel semikontinuierlich in sogenannten Siegelstationen mit einer Deckelfolie gesiegelt. Dafür werden zunächst die mit dem Verpackungsgut gefüllte Verpackungsmulde und die Deckelfolie in die Siegelstation transportiert. Sobald sich die Verpackungsmulde in der Siegelstation befindet, wird von unten ein erstes unteres Siegelwerkzeug vertikal angehoben und gegen ein zweites oberes, über der Deckelfolie angeordnetes, beheiztes Siegelwerkzeug gepreßt. Durch den Druck und die Temperatur werden die Deckelfolie und der Rand der Verpackungsmulde, die sich zwischen den Siegelwerkzeugen befinden, gesiegelt. Um eine gasdichte Siegelnaht zu erhalten, ist es wichtig, daß die Siegelnaht eine gewisse Breite aufweist und daß sich die Siegelnaht im Wesentlichen in der Mitte des Randes der Verpackungsmulde befindet. Nach dem Siegeln wird das erste Siegelwerkzeug wieder unterhalb die gerade gesiegelte Verpackungsmulde abgesenkt und die gesiegelte Verpackungsmulde zur Schneidestation weitertransportiert.

Obwohl sich diese Art der Siegelstation seit vielen Jahren im Einsatz befindet, weist sie dennoch einige Nachteile auf. So können Verpackungsmulden mit einem Hinterschnitt, mit einem solchen Siegelwerkzeug nicht gesiegelt werden, weil das erste Siegelwerkzeuge beim Anheben bzw. Absenken gegen diesen Hinterschnitt stößt und diesen zerstört. Aber auch bei Verpackungen ohne Hinterschnitt kommt es beim Siegeln von schwer beladenen Verpackungsmulden immer wieder zu Problemen, weil die Verpackungsmulden durchhängen. Durch dieses Durchhängen stellen sich die Verpackungsmulden schräg und das hochfahrende erste Siegelwerkzeug stößt gegen deren Ecken und zerstört oder deformiert diese.

Es stellt sich deshalb die Aufgabe, eine Vorrichtung zur Verfügung zu stellen, mit der eine Verpackungsmulde mit einem Hinterschnitt gesiegelt werden kann und die die anderen Nachteile des Standes der Technik nicht aufweist.

Die Aufgabe wird erfindungsgemäß durch die Bereitstellung eines unteren Siegelwerkzeug zum Siegeln einer Verpackungsmulde mit einer Deckelfolie bestehend aus einem Unterteil, Seitenteilen, die quer und Seitenteilen, die parallel zur Transportrichtung der Verpackungsmulden ausgerichtet sind, wobei die Seitenteile, die quer zur Transportrichtung ausgerichtete sind nach unten verschiebbar sind, während die anderen Teile des unteren Siegelwerkzeuges in ihrer räumlichen Lage gegenüber dem Maschinenrahmen fixiert sind.

In seiner räumlichen Lage gegenüber dem Maschinenrahmen fixiert bedeutet im Sinne der Erfindung nicht, daß das Teil völlig starr angeordnet sein muß. Es kann sich durchaus um einige Millimeter bewegen.

Vorzugsweise sind die Seitenteile, die quer zur Transportrichtung der Verpackungsmulde ausgerichtet sind, vertikal nach unten verschiebbar.

In einer weiteren bevorzugten Ausführungsform weisen die Seitenteile, die in ihrer Lage gegenüber dem Maschinenrahmen unverändert bleiben, an ihrer Oberseite eine Oberfläche mit einem geringen Reibkoeffizienten auf. Diese Oberfläche kann entweder poliert oder mit Teflon oder ähnlichem beschichtet sein.

Vorzugsweise verjüngen sich die Seitenteile, die parallel zur Transportrichtung der Verpackungsmulde ausgerichtet sind von oben nach unten, so daß mit ihnen Verpackungsmulden gesiegelt werden können, die einen oder mehrere parallel zur Transportrichtung der Verpackung ausgerichtete Hinterschnitt(e) aufweist (aufweisen).

Ein weiteres erfindungsgemäßes unteres Siegelwerkzeug dient vorzugsweise zum Siegeln von mindestens zwei nebeneinander angeordneten Verpackungsmulden. Eine solches Siegelwerkzeug weist neben dem Unterteil, den Seitenteilen, die quer und den Seitenteilen, die parallel zur Transportrichtung der Verpackungsmulden ausgerichtet sind, zusätzlich mindestens ein Mittelteil auf, wobei die Seitenteile, die quer zur Transportrichtung ausgerichtet sind, nach unten verschiebbar sind, während die anderen Teile des unteren Siegelwerkzeuges in ihrer räumlichen Lage gegenüber dem Maschinenrahmen fixiert sind.

Vorzugsweise sind die Seitenteile, die quer zur Transportrichtung der Verpackungsmulde ausgerichtet sind, vertikal nach unten verschiebbar.

In einer weiteren bevorzugten Ausführungsform weisen die Mittelteile und die Seitenteile, die parallel zur Transportrichtung der Verpackungsmulde ausgerichtet sind, an ihrer Oberseite eine Oberfläche mit einem geringen Reibkoeffizienten auf. Diese Oberfläche kann entweder poliert oder mit Teflon oder ähnlichem beschichtet sein.

Vorzugsweise verjüngen sich das Mittelteil und/oder die Seitenteile, die parallel zur Transportrichtung der Verpackungsmulde angeordnet sind von oben nach unten, so daß mit ihnen Verpackungsmulden gesiegelt werden können, die einen oder mehrere parallel zur Transportrichtung der Verpackung ausgerichtete Hinterschnitt(e) aufweist (aufweisen).

Eine weitere Aufgabe der vorliegenden Erfindung ist es, ein Verfahren zum Siegeln von Verpackungsmulden zur Verfügung zu stellen, das die Nachteile des Standes der Technik nicht aufweist.

Diese Aufgabe wird erfindungsgemäß durch die Bereitstellung eines Verfahrens zum Siegeln einer Verpackungsmulde mit einer Deckelfolie unter Verwendung des erfindungsgemäßen unteren Siegelwerkzeugs gelöst, wobei
- die Deckelfolie und die Verpackungsmulde in die Siegelstation transportiert und gegebenenfalls fixiert und zwischen das untere Siegelwerkzeug und das obere Siegelwerkzeug gepreßt, erhitzt und dabei gesiegelt werden,
- die verschiebbaren Teile des unteren Siegelwerkzeuges abgesenkt werden und
- die fertiggestellte Verpackung weitertransportiert wird.

In einer bevorzugten Ausführungsform des erfindungsgemäßen Verfahrens werden die verschiebbaren Teile des unteren Siegelwerkzeuges vertikal nach unten verschoben.

Die vorliegende Erfindung hat den Vorteil, daß eine Verpackungsmulde mit einer oder mehreren parallel zur Transportrichtung der Verpackungsmulde ausgerichteten Hinterschnitten mit einer Deckelfolie gesiegelt werden kann. Ein weiterer Vorteil der Erfindung besteht darin, daß schwer beladende Verpackungsmulden durch das in seiner Lage räumlich fixierte Seiten- und/oder Mittelteil unterstützt wird und damit nicht mehr durchhängt, so daß das Siegelwerkzeug die Verpackungsmulde beim Hoch- und Runterfahren nicht mehr zerstört.

Die Erfindung wird im folgenden anhand der **Figuren 1-3** erläutert. Diese Erläuterung ist lediglich beispielhaft und schränkt somit den allgemeinen Erfindungsgedanken nicht ein.

Die **Figur 1** zeigt eine Verpackung mit Hinterschnitt.

Die **Figuren 2** zeigt ein erfindungsgemäßes Siegelwerkzeug zum Siegeln von einer Verpackungsmulde mit einer Deckelfolie.

Die **Figuren 3a und 3b** zeigen ein erfindungsgemäßes unteres Siegelwerkzeug zum Siegeln von zwei Verpackungsmulden mit einer Deckelfolie.

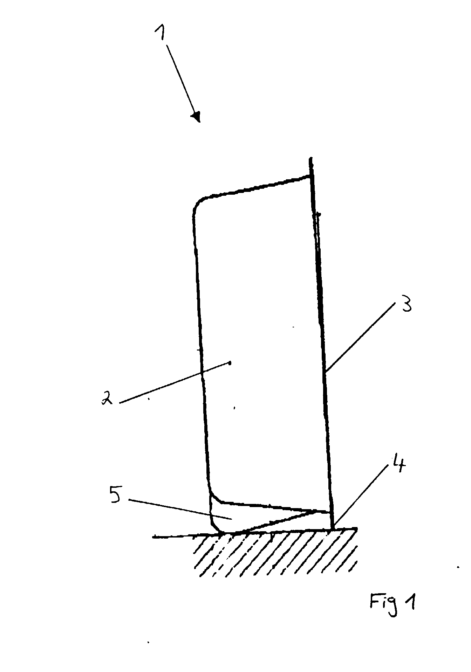

Die **Figur 1** zeigt eine Verpackung mit Hinterschnitten. Die Verpackung 1 besteht aus einer Verpackungsmulde 2 und einer Deckelfolie 3. Bei der dargestellten Verpackung handelt es sich um eine sogenannte Stand-up Verpackung, die mit ihrer schmalen Seite auf der gezeigten Fläche steht. Die Stand-up Verpackung weist Hinterschnitte 5 auf, um die Verpackung in ihrer aufgestellten Lage zu stabilisieren.

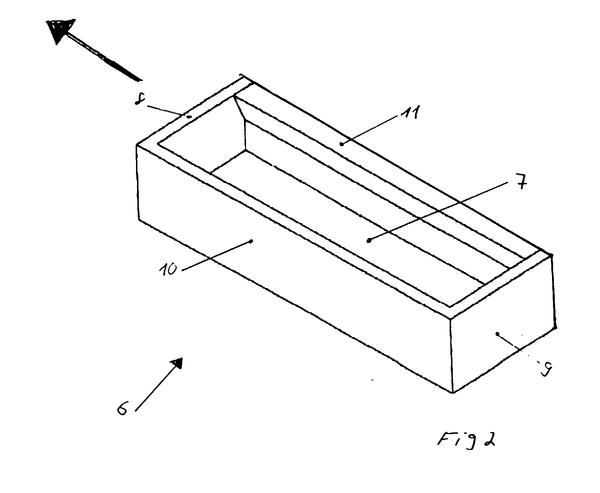

In **Figur 2** ist das erfindungsgemäße, untere Siegelwerkzeug 6 zum Siegeln einer Verpackungsmulde mit einer Deckelfolie dargestellt. Das Siegelwerkzeug weist ein Unterteil 7, Seitenteile 8, 9, die quer und Seitenteile 10, 11, die parallel zur Transportrichtung der Verpackungsmulden ausgerichtet sind, auf. Der Pfeil zeigt die Transportrichtung der gesiegelten Verpackungsmulden an. Das Seitenteil 11 ist am oberen Ende dicker als am unteren Ende, so daß mit diesem Siegelwerkzeug Verpackungsmulden mit einem Hinterschnitt auf der dem Seitenteil 11 zugewandten Seite gesiegelt werden können. Wenn eine Verpackungsmulde mit zwei Hinterschnitten gesiegelt werden soll, so kann auch das Seitenteil 10 entsprechend dem Seitenteil 11 ausgebildet sein. Die Seitenteile 8, 9 sind vertikal nach unten absenkbar, so daß die Verpackungsmulde nach dem Siegeln in Richtung des dargestellten Pfeiles weitertransportiert werden kann, ohne daß der Hinterschnitt Schaden nimmt.

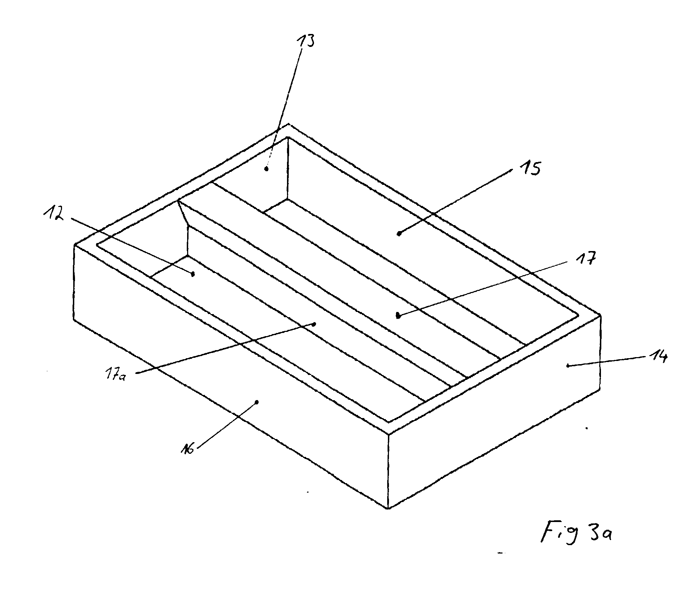

In **Figur 3a** ist ein erfindungsgemäßes Siegelwerkzeug zum Siegeln von zwei Verpackungsmulden mit Deckelfolien dargestellt. Neben der Unterseite 12, den Seitenteilen 13, 14, die quer und Seitenteile 15, 16, die parallel zur Transportrichtung der Verpackungsmulden ausgerichtet sind, weist diese Matrize die Mittelteile 17, 17a auf. Das Mittelteil 17 verjüngt sich auf beiden Seiten von oben nach unten, so daß mit diesem Siegelwerkzeug Verpackungsmulden gesiegelt werden können, die Hinterschnitte aufweisen, die dem Mittelteil 17, 17a zugewandt sind. Das Mittelteil 17a weist einen konstanten Querschnitt auf. Der Fachmann erkennt sofort, daß die Mittelteile 17 und 17a auch als ein Teil gefertigt werden können. Ferner erkennt der Fachmann, daß das Mittelteil auch insgesamt einen konstanten Querschnitt aufweisen kann. In diesem Fall könnten keine Verpackungen mit einem Hinterschnitt gesiegelt werden. Das Mittelteil würde dann lediglich zur Unterstützung der Folie zwischen den Verpackungsmulden dienen, damit diese nicht durchhängt. Selbstverständlich können sich auch die Seitenteile 15 und 16 von oben nach unten verjüngen, so daß mit diesem Siegelwerkzeug Verpackungsmulden gesiegelt werden können, die Hinterschnitte aufweisen, die den Seitenteilen 15, 16 zugewandt sind.

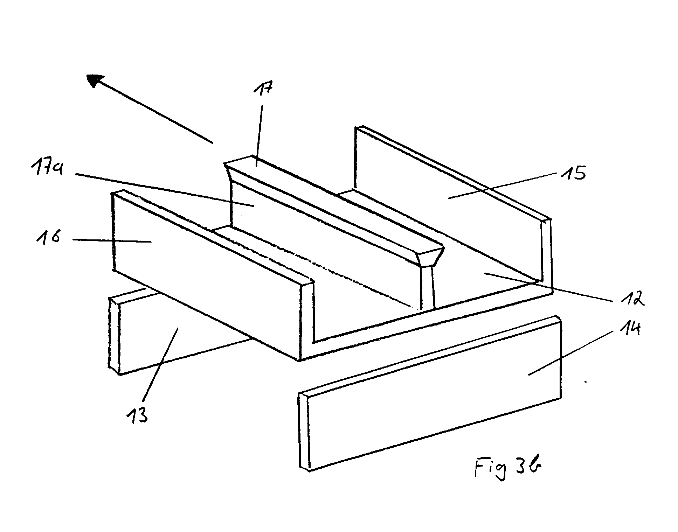

In **Figur 3b** ist das Siegelwerkzeug gemäß **Figur 3a** nach dem Absenken der Seitenteile 13, 14 dargestellt. Nach dem Siegeln werden die Teile 13, 14 des Siegelwerkzeuges abgesenkt, während die Teil 12, 15, 16, 17 und 17a nicht abgesenkt wird sondern in ihrer räumlichen Lage fixiert bleiben. Die gesiegelten Verpackungsmulden können dann in Richtung des dargestellten Pfeiles, parallel zum Mittelteil 17 weitertransportiert werden, ohne daß die Hinterschnitte der Verpackungsmulden Schaden nehmen.

## Patentansprüche

1. Siegelwerkzeug (6) zum Siegeln einer Verpackungsmulde mit einer Deckelfolie bestehend aus einem Unterteil (7), Seitenteilen (8, 9), die quer und Seitenteilen (10, 11), die parallel zur Transportrichtung der Verpackungsmulden ausgerichtet sind, dadurch gekennzeichnet, daß Seitenteile (8, 9), die quer zur Transportrichtung ausgerichtete nach unten verschiebbar sind, während die anderen Teile (7, 10, 11) des Siegelwerkzeuges in ihrer räumlichen Lage gegenüber dem Maschinenrahmen fixiert sind.

2. Siegelwerkzeug nach Anspruch 1, dadurch gekennzeichnet, daß die Seitenteile (8, 9) vertikal nach unten verschiebbar sind.

3. Siegelwerkzeug nach einem der Ansprüche 1 oder 2, dadurch gekennzeichnet, daß die Seitenteile (10, 11), auf ihrer Oberseite eine reibungsarme Oberfläche aufweisen.

4. Siegelwerkzeug nach einem der Ansprüche 1-3, dadurch gekennzeichnet, daß sich das/die Seitenteil(e) (10, 11) vom oberen Ende des Siegelwerkzeuges nach unten hin verjüngen.

5. Siegelwerkzeug zum Versiegeln mehrerer Verpackungsmulden mit Deckelfolien, bestehend aus einem Unterteil (12), Seitenteilen (13, 14), die quer und Seitenteilen (15, 16), die parallel zur Transportrichtung der Verpackungsmulden ausgerichtet sind und mindestens einem Mittelteil (17, 17a), dadurch gekennzeichnet, daß die Seitenteile (13, 14), die quer zur Transportrichtung ausgerichtete sind nach unten verschiebbar sind, während die anderen Teile (12, 15, 16, 17, 17a) des Siegelwerkzeuges in ihrer räumlichen Lage gegenüber dem Maschinenrahmen fixiert sind.

6. Siegelwerkzeug nach Anspruch 5, dadurch gekennzeichnet, daß die Seitenteile (13, 14) vertikal nach unten verschiebbar sind.

7. Siegelwerkzeug nach Anspruch 6, dadurch gekennzeichnet, daß sich das Seitenteil (15) und/oder das Seitenteil (16) auf der nach innen gerichteten Seite vom oberen Ende des Siegelwerkzeuges in Richtung zur Unterseite hin verjüngen.

8. Siegelwerkzeug nach einem der Ansprüche 5 bis 7, dadurch gekennzeichnet, daß sich das Mittelteil (17) vorzugsweise auf beiden Seiten vom oberen Ende des Siegelwerkzeuges in Richtung zur Unterseite hin verjüngt.

9. Siegelwerkzeug nach einem der Ansprüche 5-8, dadurch gekennzeichnet, daß das Mittelteil (17) und gegebenenfalls die Seitenteile (15, 16) eine reibungsarme Oberfläche aufweisen.

10. Verfahren zum Siegel einer Verpackungsmulde mit einer Deckelfolie mit einem Siegelwerkzeug nach einem der Ansprüche 1-9, dadurch gekennzeichnet, daß:
- die Deckelfolie und die Verpackungsmulde in die Siegelstation transportiert und gegebenenfalls fixiert und zwischen das obere Siegelwerkzeug und das untere Siegelwerkzeug gepreßt, erhitzt und dabei gesiegelt werden,
- die vertikal verschiebbaren Teile (8, 9 oder 13, 14) des unteren Siegelwerkzeuges abgesenkt werden und
- die fertiggestellte Verpackung weitertransportiert wird.

11. Verfahren nach Anspruch 10, dadurch gekennzeichnet, daß die verschiebbaren Teile (8, 9 oder 13, 14) vertikal abgesenkt werden.
